# EUROPEAN PATENT APPLICATION

(11) **EP 1 096 199 A2**
(43) Date of publication of application: **02.05.2001**
(21) Application number: 00203277.9
(22) Date of filing: 21.09.2000
(51) Int. Cl.: F22B 37/58

(54) **Method of boiler tube removable**

(30) Priority: 27.10.1999 US 428043
(71) Applicant: Advanced Cutting Technologies, Ltd., Westerville, Ohio 43081 (US)
(72) Inventor: Weeks, Bruce V., Pataskala, Ohio 43062 (US)
(74) Representative: Weydert, Robert

(57) **Abstract**

The method steps of the present invention basically involve first forming a gap-metal tab (26) in the flare end of the boiler tube flared-end segment (20) having an insufficient-depth pair of spaced-apart longitudinal grooves (22, 24) by a radially-inward shear and bend force applied to the tube segment flare, followed by shearing and bending the remaining tube gap metal from the tube segment (20) by applying a force having radially-inward and longitudinally-forward force components applied to the gap-metal tab (26) and to the tube segment gap metal longitudinally contiguous to the tube segment (20) and throughout the tube segment length. Afterwards the fully-gapped tube segment (20) may be conventionally diametrically compressed to reduce the tube segment diameter power boiler drum wall tube bore (12) thereby facilitating subsequent longitudinal withdrawal of the tube segment (20) from retention within that drum wall tube bore (12).

## Description

### BACKGROUND OF THE INVENTION:

The removal of water-tubes and fire-tubes from within power boilers for subsequent replacement using a tube-end groove-cutting tool of the type disclosed and claimed in U. S. Letters Patent No. 5,893,209 granted to Weeks et al. results in an intermediate-stage boiler tube flared-end segment that although having a pair of longitudinal grooves such grooves do not extend completely through the tube end wall material and the longitudinally-machined tube segment remains retained in the co-operating boiler drum wall. Such occurs because of a requirement to not cut into or otherwise score or damage drum wall metal.

Ideally, the pair of partial-depth longitudinal grooves can be cut in depth to within approximately 0.010 inch of being completely through the tube flared-end segment wall, and subsequently it is only necessary to diametrically compress the longitudinally grooved tube segment to place it in a condition for tube segment diameter reduction by diametric compression and longitudinal tube segment withdrawal from retention in drum or header wall with assured non-damage to the incorporating boiler header wall metal. However, field conditions are not always ideal.

In known instances, and for reasons such as tool construction difficulties and tool operation shortcomings, the partial-depth longitudinal grooves can be cut only to within approximately 0.100 inch of being completely through the flared-end segment wall, and subsequent immediate diametrical compression and tube withdrawal steps have proven extremely difficult, if not practically impossible, to accomplish.

I have discovered, however, that ease of boiler tube flared-end segment removal can be significantly enhanced in those insufficient groove depth cases by the inclusion of additional steps in the removal process intermediate the steps of longitudinal grove formation and tube diametrical compression. Consequently, longitudinal removal of the then longitudinally-gapped tube segment from retention in the boiler drum wall may then be more conveniently and effectively accomplished.

Other objects and advantages of the present invention will become apparent from a consideration of the descriptions, drawings, and claims which follow.

### SUMMARY OF THE INVENTION:

The method steps of the present invention basically involve first forming a gap-metal tab in the flare end of the boiler tube flared-end segment having an insufficient-depth pair of spaced-apart longitudinal grooves by a radially-inward shear and bend force applied to the tube segment flare, followed by shearing and bending the remaining tube gap metal from the tube segment by applying a force having radially-inward and longitudinally-forward force components applied to the gap-metal tab and to the tube segment gap metal longitudinally contiguous to the tube segment and throughout the tube segment length. Afterwards the fully-gapped tube segment may be conventionally diametrically compressed to reduce the tube segment diameter power boiler drum wall tube bore thereby facilitating subsequent longitudinal withdrawal of the tube segment from retention within that drum wall tube bore.

### BRIEF DESCRIPTION OF THE DRAWINGS:

Figure1 is a cross-section view of a boiler tube flared-end segment retained within a boiler drum wall tube bore and having spaced-apart longitudinal grooves of sufficient depth for subsequent convenient tube segment compression;
Figure 2 is a cross-section view of the Figure 1 boiler tube flared-end segment following subsequent conventional tube segment diametrical compression;
Figure 3 is a cross-section view, similar to Figure 1, but illustrating the boiler tube flared-end segment as having a longitudinal groove pair of insufficient depth for conveniently accomplishing the Figure 2 diametric compression step;
Figure 4 is a longitudinal-section view of the Figure 3 tube flared-end segment illustrating formation of the previously-mentioned gap metal tab at the tube segment flare;
Figure 5 is a cross-section view taken at line 5-5 of Figure 4;
Figure 6 is a longitudinal-section view of the Figures 4 and 5 tube flared-end segment illustrating the shearing of remaining gap metal from the tube flared-end segment by application of radially-inward and longitudinal-forward force components applied to the gap metal tab and longitudinally-contiguous metal throughout the tube segment length;
Figure 7 is a cross-section view taken at line 7-7 of Figure 6; and
Figure 8 schematically illustrates the cross-section configuration of the boiler tube flared-end segment following completion of the steps depicted by Figures 4 through 7 and prior to the conventional diametric compression step depicted by Figure 2.

### DETAILED DESCRIPTION:

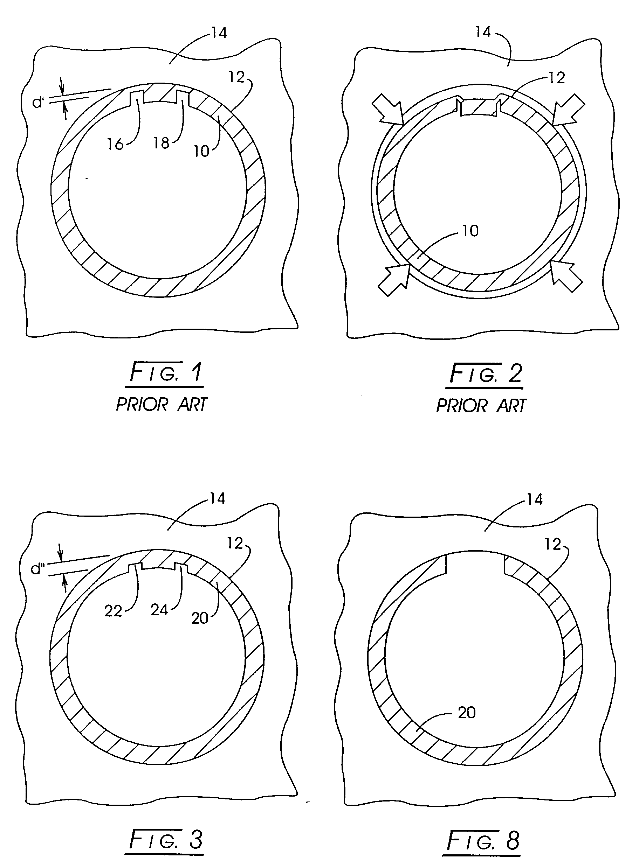

Figure 1 schematically illustrates, in cross-section, a prior art boiler tube flared-end segment **10** operationally retained in tube bore **12** of power boiler drum or header wall **14**. Tube segment **10** includes longitudinal grooves **16** and **18** formed using the tool assembly of U.S. Letter Patent 5, 893,209 granted to Weeks et al. The Figure 1 dimension **d'** pertains to the thickness of the remaining tube wall metal, and is preferably approximately, but not less than, 0.010 inch in order that there be assured non-scoring or other damage of or to the interior face of tube bore **12**. If scoring or damage to that tube bore face should occur, it is generally necessary that the entire bore face be provided with weld metal, and that the tube bore be re-bored to have flawless tube face continuity for a subsequently installed replacement boiler tube. Such welding and re-boring steps comprise a relatively expensive and time-consuming procedure.

As shown in Figure 2, the conventionally-grooved boiler tube flared-end segment is next preferably subjected to opposed diametric compression forces ( represented by force vectors shown as heavied arrows) to in effect accomplish a tube segment diameter reduction and facilitate subsequent longitudinal withdrawal of the tube segment from retention within tube bore **12** of drum wall **14**.

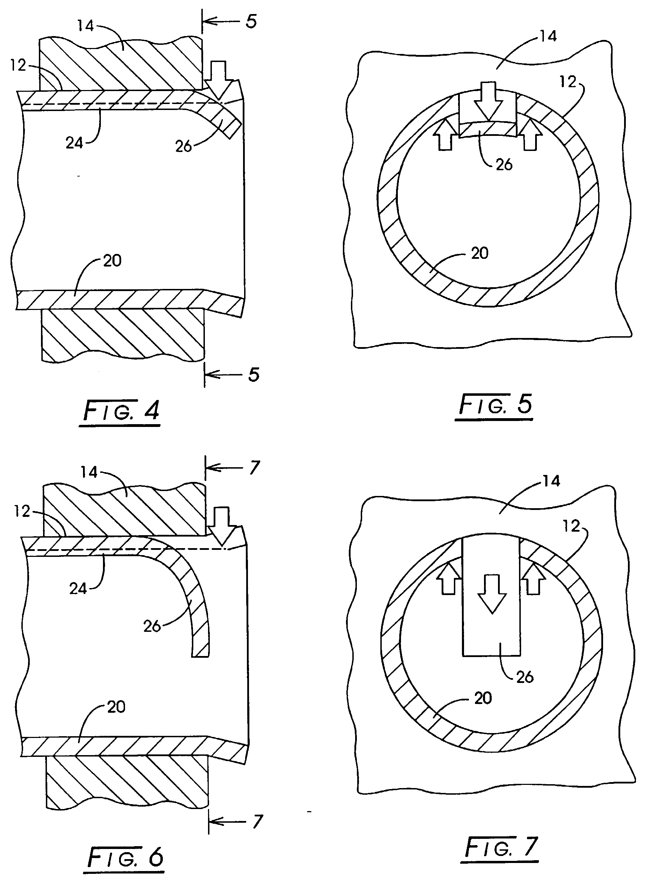

In some known instance, and generally because of grooving-tool design or construction limitations, it is possible to cut the desired pair of spaced-apart longitudinal grooves in the wall-retained tube segment whereby the remaining wall metal has a depth **d''** of as much as approximately 0.100 inch as in the case of boiler tube flared-end segment **20** and longitudinal grooves **22** and **24** of Figure 3. In such a case it is unusually difficult to accomplish the ensuing conventional diametric compression step referred to in connection with Figure 2.

The present invention basically involves inserting two additional steps in the prior art boiler tube removal procedure. The first step is illustrated using Figures 4 and 5; the second step is illustrated schematically by Figure 6 and 7. In the Figure 4/Figure 5 step, a radially-inwardly oriented shear and bend force (represented by the Figure 4 heavied arrow force vector) is applied to the protruding flare of tube flared-end segment **20** in sufficient magnitude and against shear resistance to cause the formation of gap-metal tab element **26**. This step may be accomplished manually or through use of a mechanical power tool such as the tool assembly disclosed and claimed in co-pending U.S. Patent Application Serial No. 09/416693, filed October 12, 1999 and assigned to the assignee of this application. The radially-inward shear force causes a separation between gap-metal tab element **26** and tube bore **12** without causing an imperfection to be formed in the tube bore surface.

In the Figure 6/Figure 7 step, a shear and bend force having radially-inward and longitudinally-forward force components (represented by the Figure 6 heavied and angled arrow force vector) is applied to the depending gap-metal tab element **26** of tube flared-end segment **20** in sufficient magnitude and against shear resistance to cause the formation of a tube wall gap throughout the entire length of tube flared-end segment **20**. This step also may be accomplished manually or through use of a mechanical power tool such as the tool assembly disclosed and claimed in co-pending U.S. Patent Application Serial No. 09/416692, filed 12 October 1999 and assigned to the assignee of this application. The radially-inward and longitudinally-forward shear force causes a separation of the remaining gap-metal of the tube segment as best shown in the schematic illustration of Figure 8. Subsequently, sufficient diametric compression forces such as those schematically illustrated in Figure 2 may be applied to the protruding flare of boiler tube flared-end segment **20** to completely close the formed wall gap thus reducing the effective diameter of tube segment **20** and facilitating its subsequent longitudinal withdrawal from retention in tube bore **12** of power boiler drum wall **14**.

## Claims

1. In a method of removing a boiler tube from retention in a power boiler drum wall, the steps of:
separating and removing a boiler tube section from a boiler tube flared-end segment retained in a power boiler header wall;
forming a pair of circumferentially spaced-apart longitudinal grooves of less that full boiler tube flared-end segment wall thickness in said retained boiler tube flared-end segment;
applying a radially-inward oriented shear and bend force to a protruding flare in said retained boiler tube flared-end segment sufficient to form a depending gap-metal tab element between said retained boiler tube flared-end segment circumferentially spaced-apart longitudinal grooves;
applying a radially inward and longitudinally-forward oriented shear and bend force to said depending gap-metal tab element sufficient to form a wall gap throughout the length of said retained boiler tube flared-end segment; and
applying diametric compression forces to said retained boiler tube flared-end segment to close said boiler tube flared-end segment wall gap and thereby facilitate subsequent longitudinal removal of said retained boiler tube flared-end segment from retention by said power boiler drum wall.

2. In a method of removing a boiler tube from retention in a power boiler drum wall, the steps of applying a radially-inward oriented shear and bend force to a protruding flare in said retained boiler tube flared-end segment sufficient to form a depending gap-metal tab element between said retained boiler tube flared-end segment circumferentially spaced-apart longitudinal grooves, and applying a radially inward and longitudinally-forward oriented shear and bend force to said depending gap-metal tab element sufficient to form a wall gap throughout the length of said retained boiler tube flared-end segment.

3. In a method of removing a boiler tube from retention in a power boiler drum wall, the step of applying a radially-inward oriented shear and bend force to a protruding flare in a retained boiler tube flared-end segment having a pair of circumferentially spaced-apart longitudinal grooves sufficient to form a depending gap-metal tab element between said retained boiler tube flared-end segment circumferentially spaced-apart longitudinal grooves.

4. In a method of removing a boiler tube from retention in a power boiler drum wall, the step of applying a radially inward and longitudinally-forward oriented shear and bend force to a depending gap-metal tab element formed between circumferentially spaced-apart longitudinal grooves sufficient to form a wall gap throughout the length of said retained boiler tube flared-end segment.
